Europäisches Patentamt

(19) European Patent Office

Office européen des brevets

(11) Numéro de publication: **0 222 626**
**B1**

(12) **FASCICULE DE BREVET EUROPEEN**

(45) Date de publication du fascicule du brevet: **14.03.90**

(21) Numéro de dépôt: **86401745.4**

(22) Date de dépôt: **05.08.86**

(51) Int. Cl.⁵: **B 63 B 7/04**, B 63 B 35/73

(54) **Engin comprenant une coque susceptible de flotter.**

(30) Priorité: **09.08.85 FR 8512254**

(43) Date de publication de la demande:
**20.05.87 Bulletin 87/21**

(45) Mention de la délivrance du brevet:
**14.03.90 Bulletin 90/11**

(84) Etats contractants désignés:
**BE DE GB IT LU NL SE**

(56) Documents cités:
**EP-A-0 085 384**
**GB-A- 797 460**
**US-A-2 266 661**
**US-A-3 734 047**

(73) Titulaire: **Bouvart, Francois Jacques**
**2, Avenue de Compiègne**
**F-60300 Senlis (FR)**

(72) Inventeur: **Bouvart, Francois Jacques**
**2, Avenue de Compiègne**
**F-60300 Senlis (FR)**

(74) Mandataire: **Hoisnard, Jean-Claude et al**
**Cabinet Beau de Lomenie 55, rue d'Amsterdam**
**F-75008 Paris (FR)**

Courier Press, Leamington Spa, England.

EP 0 222 626 B1

**Description**

L'invention est relative à un engin comprenant une coque susceptible de flotter sur un plan d'eau, la partie arrière de ladite coque constituant l'espace creux d'une poste de navigation, et une partie d'extrémité avant qui constitue une étrave amovible distincte de la coque, susceptible d'être solidarisée et détachée de la partie avant de la coque et qui, dans la configuration dans laquelle elle est détachée de ladite partie avant de la coque, est susceptible d'être mise en place, après retournement, au-dessus du poste de navigation pour constituer un volume, de préférence une pièce d'habitation.

EP—A—0 085 384 et GB—A 797 460 représentent des embarcations qui sont séparées en deux parties par un plan vertical transversal approximativement équidistant des deux extrémités de l'embarcation assemblée, la partie avant, comprenant l'étrave, pouvant être retournée et venir recouvrir la partie arrière, et ainsi rendre possible de déplacement terrestre de l'embarcation. A noter que dans ces dispositions antérieures, l'étrave n'est pas distincte de la coque, mais en constitue au contraire une partie intégrante.

On connaît le développement des loisirs et du goût des voyages sur l'eau (en rivière, en mer), aussi bien que des habitations terrestres mobiles. Les amateurs sont cependant aujourd'hui, pour la plupart, gênés par le choix obligatoire de voyager ou avec un bateau, ou avec une habitation terrestre mobile, avec en outre, pour les bateaux de petites tailles, l'impossibilité de pouvoir l'habiter, comme cela est le cas pour certaines des dispositions décrites dans les deux documents antérieurs précités.

L'invention entend remédier à cet inconvénient en permettant de transformer un bateau de manière à le doter d'un volume fermé plus important que les habituels coffres de rangement, éventuellement et de préférence habitable, et en dotant ce bateau de dispositions nouvelles peu coûteuses, qui le rendent encore économiquement réalisable.

A cet effet, selon l'invention, l'engin comporte des passages, qui sont ménagés dans la partie inférieure de la paroi séparant le volume, délimité par l'étrave et par la partie avant de la coque dans la configuration dans laquelle l'étrave est solidarisée avec la coque, de l'extérieur de cette étrave et qui établissent une communication dudit volume avec l'extérieur de l'étrave.

Les avantageuses dispositions suivantes sont en outre de préférence adoptées:

— les dits passages sont constitués par des portions de la partie inférieure avant de la coque, qui, dans la zone de jonction de l'étrave avec la coque, sont en retrait par rapport à la surface adjacente de cette coque;

— l'étrave amovible est rendue solidaire de l'avant de la coque par des moyens de solidarisation comprenant, notamment, une couronne de rainurage, éventuellement discontinue, située dans un plan contenant un axe horizontal transversl de la coque;

— ou bien, dans la configuration dans laquelle l'étrave amovible recouvre le poste de navigation, cette étrave est ajustée à la coque et sépare entièrement le poste de navigation de l'espace extérieur à l'engin,

— ou bien, la lisière supérieure avant de l'espace de navigation étant constituée par une visière transparente, dans la configuration dans laquelle l'étrave amovible recouvre le poste de navigation, cette étrave est ajustée au bord de la visière et laisse cécouverte ladite visière;

— l'extrémité arrière de la coque est constituée par un "tableau arrière" de bateau et par un portique surmontant ce "tableau arrière", cependant que, d'une part, un paroi amovible, de préférence au moins partiellement transparente, est susceptible d'être ajustée au-dessus du "tableau arrière", à l'intérieur du cadre constitué par le portique, d'autre part, l'étrave amovible, lorsqu'elle recouvre le poste de navigation, est en appui sur ledit portique;

— une couronne de rainurage, éventuellement discontinue, est situé sur les faces du portique.

L'avantage principal de l'invention réside dans la possibilité qu'a l'utilisateur de transformer la coque de son bateau en un volume important, le plus souvent habitable. Lorsque cette dernière condition est réalisée, il est aisé de transformer l'ensemble en une caravane terrestre et ainsi, de rendre l'engin réellement polyvalent, ceci avec un coût de réalisation limité.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:

— la figure 1 est une vue en perspective de l'arrière d'une première réalisation d'un engin conforme à l'invention, dans une première configuration d'utilisation;

— la figure 2 est une vue analogue à celle de la figure 1, du même engin, mais dans une deuxième configuration d'utilisation;

— la figure 3 est une vue en perspective de l'avant de l'engin de la figure 1, dans ladite première configuration d'utilisation;

— la figure 4 est une vue analogue à celle de la figure 3, du même engin, dans sa deuxième configuration d'utilisation;

— la figure 5 est une vue en élévation de l'engin des figures 1 et 3;

— les figures 6 et 7 sont des sections suivant VI—VI et VII—VII, respectivement, de la figure 5;

— la figure 8 est une section suivant VIII—VIII de la figure 1;

— la figure 9 est une section suivant IX—IX de la figure 2; et,

— la figure 10 est une vue en élévation d'une deuxième réalisation d'un engin conforme à l'invention, montrant deux configurations distinctes d'utilisation.

L'ensemble représenté sur les dessins comprend une coque 1 de bateau, susceptible de flotter et une étrave 2, amovible par rapport à la coque 1.

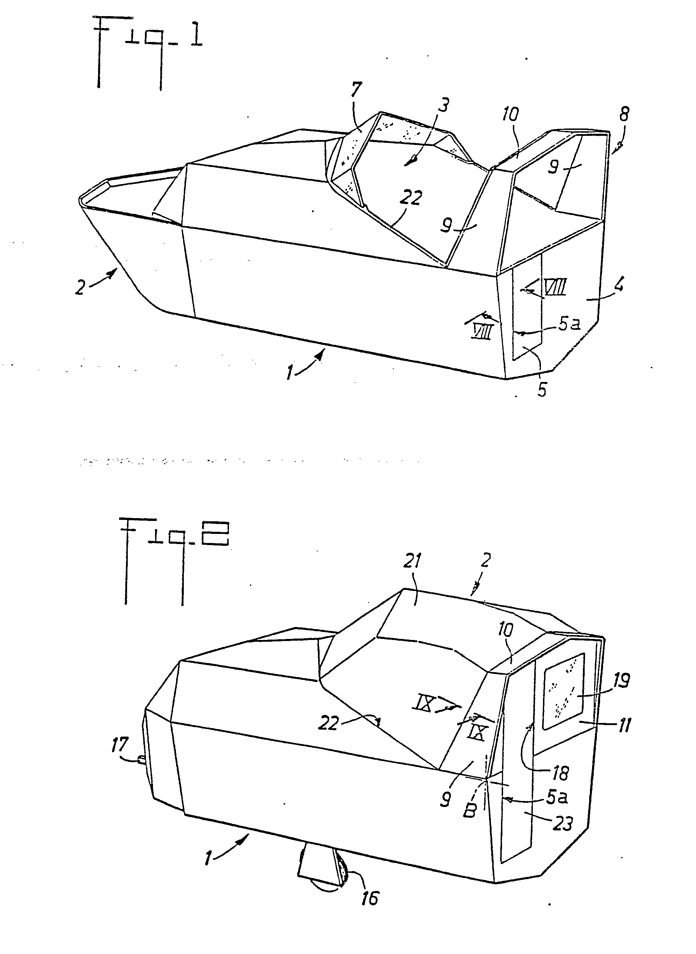

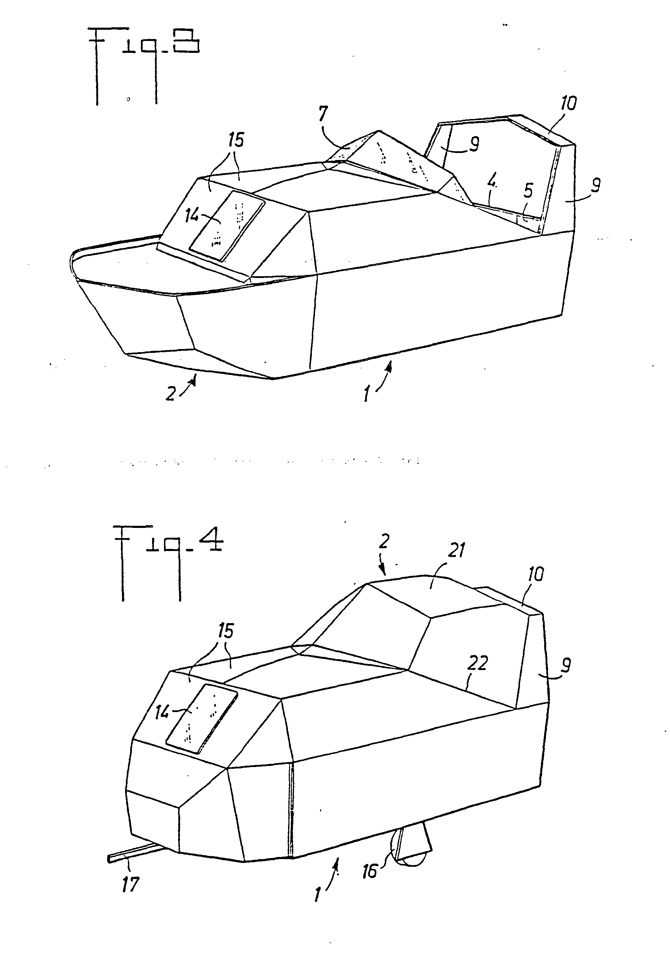

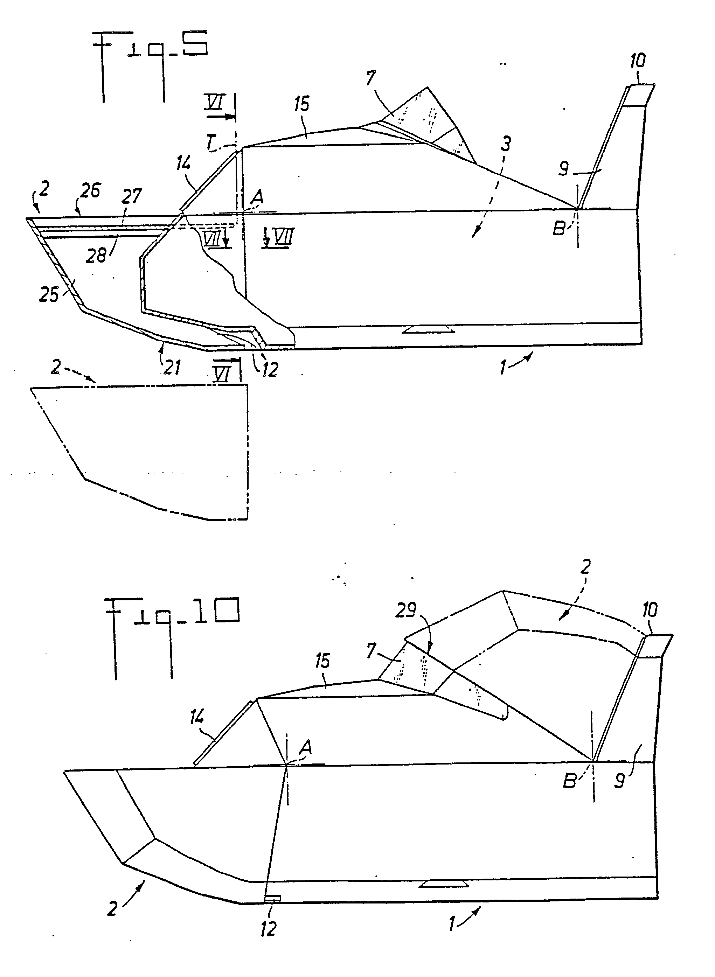

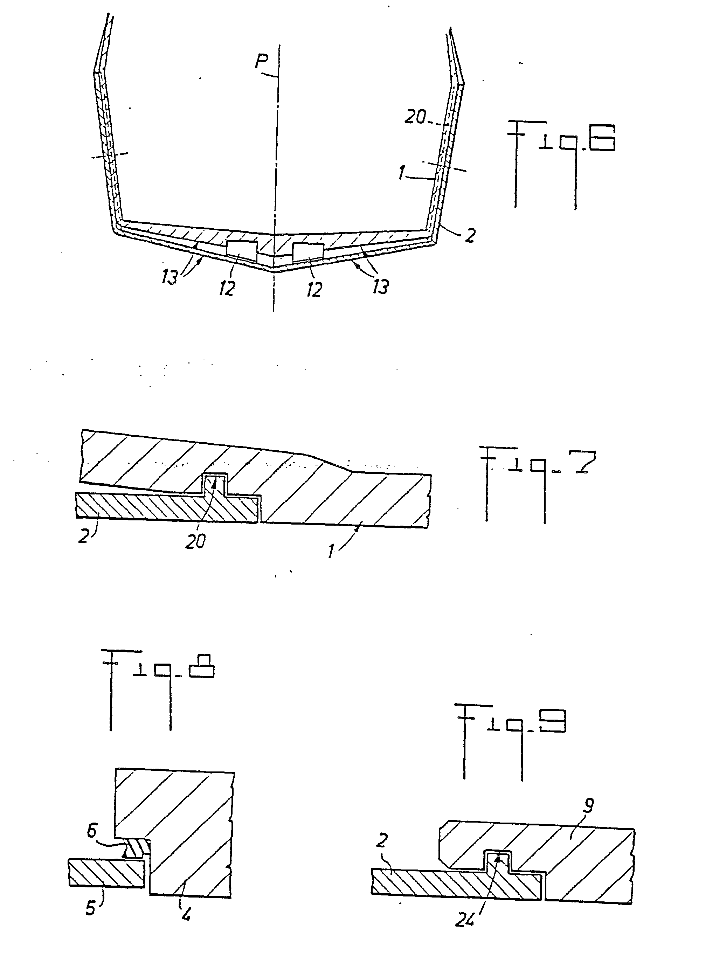

La coque 1 est constituée par:
— la coque proprement dite 1;
— un espace arrière 3 découvert, qui constitue le poste de navigation, où se trouve normalement le pilote du bateau;
— un tableau arrière 4, plat, qui délimite à l'arrière le poste de navigation 3, dont la face supérieure est ouverte;
— d'un côté du tableau arrière 4, celui-ci est muni d'un panneau 5, amovible, ajusté au reste du tableau arrière 4 avec interposition d'un joint d'étanchéité 6 (figure 8);
— à l'avant du poste de navigation 3 est disposée une visière ou pare-brise 7;
— un portique 8, a deux montants 9 et une barre supérieure horizontale 10, surmonte le tableau arrière 4 et constitue, avec la lisière supérieure de ce tableau arrière, un cadre à l'intérieur duquel une paroi amovible 11 est susceptible d'être mise en place (figure 2);
— la partie inférieure avant de la coque 1 est munie, de chaque côté du plan longitudinal de symétrie P, de parties 12 en retrait par rapport à la surface ajacente 13 de cette coque;
— un panneau amovible 14 est fixé au pont supérieure avant de la coque, et permet de pénétrer de l'extérieur de la coque à l'intérieur d'un volume situé en-dessous dudit pont avant 15, de préférence clos, mais également accessible de l'intérieur du poste de navigation 3 par une porte;
— des roues 16, soit escamotables, soit amovibles, soit même éventuellement fixées à demeure, permettent de supporter et de déplacer la coque 1 sur le sol, étant généralement montées sur la coque 1, mais pouvant en variante appartenir à une remorque de déplacement routier;
— un attelage 17 de traction routière est susceptible enfin d'être adapté à la partie inférieure avant de la coque (figures 2 et 4).

La paroi amovible 11, qui est éventuellement mise en place au-dessus du tableau arrière 4, à l'intérieur du cadre défini par la portique 10, comporte une partie évidée 18 disposée au-dessus et dans le prolongement de l'ouverture 5a du tableau arrière 4 à laquelle est adapté le panneau amovible 5 du tableau arrière 4, anisi qu'une vitre transparente 19. Une ouverture complète est constituée par l'ensemble de la partie évidée 18 et de l'ouverture 5a, à laquelle une porte 23 peut être adaptée.

L'étrave amovible 2 est susceptible d'occuper deux positions principales distinctes:
— la première position, représentée notamment sur les figures 1 et 3, dans laquelle l'étrave 2 est adaptée à la partie avant de la coque 1, au moyen notamment d'un ensemble de rainures 20 contenu sensiblement dans un plan transversal vertical T de la coque, ou, plus généralement dans un plan contenant un axe transversal horizontal A (le plan pouvant alors être incliné par rapport à la direction verticale): l'étrave assure alors sa fonction traditionnelle d'étrave;
— la deuxième position, représentée notamment sur les figures 2 et 4, dans laquelle l'étrave 2, détachée de la partie avant de la coque 1, a été retournée, de manière que sa face normalement inférieure 21, soit dans cette deuxième position orientée vers le haut, et qu'alors l'étrave 2 recouvre l'espace 3 du poste de navigation en s'adaptant aux montants 9 et à la barre 10 du portique 8, ainsi qu'à la lisière 22 bordant ledit poste de navigation 3. Dans cette deuxième position, un autre ensemble de rainures 24 participe à la fixation de l'étrave 2 sur la coque 1, en contenant également un autre axe transversal horizontal B.

Il convient de faire les observations suivantes:
— dans la configuration (figure 5), dans laquelle l'étrave 2 est fixée à la partie avant de la coque 1, un volume 25 est déterminé à l'intérieur de l'étrave 2 entre celle-ci et la face extérieur de la coque, la partie inférieure de l'étrave 2 rejoignant la coque 1 dans la zone où sont disposées les parties de la coque en retrait 12, ces parties en retrait 12 faisant communiquer le volume 25 avec l'extérieur du bateau;
— la face supérieure 26 de l'étrave, dans la position où l'étrave est fixée à l'avaqnt de la coque 1, est normalement ouverte, mais, d'une part, un étai 28 peut être mis en place entre l'étrave 2 et la coque 1 à proximité de la face 26, pour consolider l'assemblage de ces deux pièces, d'autre part, le face 26 peut être obturée par un panneau supérieur amovible 27;
—l'étrave 2 est, de préférence, réalisée en un matériau plastique stratifié armé, avec cependant une partie réalisée en une matière plastique alvéolaire à cellules fermées, qui lui procure une flottabilité positive;
— dans la réalisation des figures 1 à 9, dans la configuration (figures 2 et 4) dans laquelle le poste de navigation 3 est recouvert par l'étrave retournée, la visière ou pare-brise 7 est également masquée et dissimulée par rapport à l'extérieur du bateau;
— au contraire, dans la réalisation de la figure 10, dans la même configuration, l'étrave 2 recouvre (en traits interrompus sur la figure 10) le poste de navigation en laissant découverte la visière 7, s'adaptant à son contour 29;
— outre les rainurages 20 et 24, il est préféré de munir l'engin de dispositifs connus de fixation rapide.

L'aptitude du bateau représenté à pouvoir être transformé en un coffre fermé, à bagages par exemple ou encore en un habitacle fermé ressemblant à celui d'une caravane classique, sans frais supplémentaires, par simple recouvrement du poste de navigation 3 par l'étrave 2, après retournement de celle-ci, constitue un progrès important.

Cet espace habitable peut, en étant sorti hors de l'eau, constituer une caravane terrestre classique, mais peut tout aussi bien servir d'habitation flottante.

Naturellement, lorsque la visière 7 reste non masquée (figure 10), elle permet un éclairage naturel de l'habitacle.

A noter que l'ouverture arrière complète 18—5a rend aisées les rentrées dans, et sorties hors de l'habitacle, la porte 23 permettant de fermer cet haibitacle.

Les retraits 12 constituent des pasages par lesquels l'eau qui aurait éventuellement pénétré dans le volume 25 de l'étrave 2, alors montée à l'avant de la coque 1, notamment à travers sa face supérieure 26, pourrait être évacuée par auto-vidage.

Les étai 28 et panneau amovible 27, complètent avantageusement le bateau, et en renforcent la structure.

**Revendications**

1. Engin comprenant une coque (1) susceptible de flotter sur un plan d'eau, la partie arrière de ladite coque constituant l'espace creux (3) d'un poste de navigation, et une partie d'extrémité avant qui constitue une étrave amovible (2) distincte de la coque (1), susceptible d'être solidarisée et détachée de la partie avant de la coque et qui, dans la configuration dans laquelle elle est détachée de ladite partie avant de la coque, est susceptible d'être mise en place, après retournement, au-dessus du poste de navigation pour constituer un volume, de préférence une pièce d'habitation, caractérisé en ce qu'il comporte en outre des passages (12), qui sont ménagés dans la partie inférieure de la paroi séparant le volume (25), délimité par l'étrave (2) et par la partie avant de la coque (1) dans la configuration (figure 5) dans laquelle l'étrave (2) est solidarisée avec la coque (1), de l'extérieur de cette étrave et qui établissent une communication dudit volume (25) avec l'extérieur de l'étrave (2).

2. Engin selon la revendication 1, caractérisé en ce que lesdits passages sont constitués par des portions (12) de la partie inférieure avant de la coque (1), qui, dans la zone de jonction de l'étrave avec la coque, sont en retrait par rapport à la surface adjacente (13) de cette coque.

3. Engin selon l'une quelconque des revendications 1 et 2, caractérisé en ce que l'étrave amovible (2) est rendue solidaire de l'avant de la coque par des moyens de solidarisation comprenant, notamment, une courenne de rainurage (20; 24), éventuellement discontinue, situé dans un plan contenant un axe (A; B) horizontal transversal de la coque.

4. Engin selon l'une quelconque des revendications 1 à 3, caractérisé en ce que dans la configuration dans laquelle l'étrave amovible recouvre le poste de navigation, cette étrave est ajustée à la coque et sépare entièrement le poste de navigation de l'espace extérieur à l'engin (figures 2 et 4).

5. Engin selon l'une quelconque des revendications 1 à 3, caractérisé en ce que la lisière supérieure avant de l'espace de navigation est constituée par une visière transparente (7), cependant que, dans la configuration dans laquelle l'étrave amovible recouvre le poste de navigation, cette étrave est ajustée au bord (29) de la visière et laisse découverte ladite, visière (figure 10).

6. Engin selon l'une quelconque des revendications 1 à 5, caractérisé en ce que l'extrémité arrière de la coque est constituée par un "tableau arrière" (4) de bateau et par un portique (8—9—10) surmontant ce "tableau arrière", cependant que, d'une part, un paroi amovible (11), de préférence au moins partiellement transparente (19), est susceptible d'être ajustée au-dessus du "tableau arrière" (4) à l'intérieur du cadre constitué par le portique (8), d'autre part, l'étrave amovible, lorsqu'elle recouvre le poste de navigation (3), est en appui sur ledit portique (8, 9, 10).

7. Engin selon la revendication 6, caractérisé en ce qu'une couronne de rainurage (24), éventuellement discontinue, est située sur les faces (9, 10) du portique (8).

**Patentansprüche**

1. Gerät, das einen Schiffskörper (1) aufweist, der geeignet ist, auf einer Wasserfläche zu schwimmen, wobei der hintere Bereich des genannten Schiffskörpers einen Hohlraum (3) eines Navigationsstandes bildet, und einen vorderen Endbereich aufweist, der einen entfernbaren Vordersteven (2) getrennt von dem Schiffskörper (1) bildet, der geeignet ist, mit dem vorderen Bereich des Schiffskörpers verbunden und von diesem getrennt zu werden und der, in der Ausbildung in der er von dem vorderen Bereich des Schiffskörpers getrennt ist, geeignet ist, nach Drehen über den Navigationsstand angeordnet zu werden, um einen Raum, vorzugsweise einen Wohnraum zu bilden, dadurch gekennzeichnet, daß es weiterhin Kanäle (12) aufweist, die in dem unteren Bereich der den Raum (25) trennenden Wand ausgebildet sind, der durch den Vordersteven (2) und durch den vorderen Bereich des Schiffskörpers (1) in der Ausbildung (Figur 5) begrenzt ist, in der der Vordersteven (2) mit dem Schiffskörper (1) von außerhalb des Vorderstevens verbunden ist, und die eine Verbindung des Raums (25) mit dem Äußeren des Vorderstevens (2) schaffen.

2. Gerät nach Anspruch 1, dadurch gekennzeichnet, daß die genannten Kanäle durch Abschnitte (12) des unteren vorderen Bereichs des Schiffskörpers (1) gebildet sind, die in der Verbindungszone des Vorderstevens mit dem Schiffskörper bezüglich der benachbarten Oberfläche (13) dieses Schiffskörpers zurückversetzt sind.

3. Gerät nach Anspruch 1 oder 2, dadurch gekennzeichnet, daß der entfernbare Vordersteven (2) mit dem vorderen Bereich des Schiffskörpers mittels Verbindungseinrichtungen verbunden wird, die insbesondere einen Kerbenkranz (20, 24), gegebenenfalls nicht kontinuierlich, aufweisen, der in einer Ebene angeordnet ist, die eine den Schiffskörper durchquerende horizontale Achse (A, B) aufweist.

4. Gerät nach einem der Ansprüche 1 bis 3, dadurch gekennzeichnet, daß in der Ausbildung, in der der entferenbare Vordersteven den Navigationsstand überdeckt, dieser Vorderrsteven zum dem Schiffskörper ausgerichtet ist und den Navigationsstand von der Umgebung des Geräts vollständig trennt (Figuren 2 und 4).

5. Gerät nach einem der Ansprüche 1 bis 3, dadurch gekennzeichnet, daß die vordere Oberkante des Navigationsraums durch einen durchsichtigen Abdeckschirm (7) gebildet ist, wo hingegen in der Ausbildung in der der entfernbare Vordersteven den Navigationsstand überdeckt, dieser Vordersteven zum Rand (29) des Abdeckschirms ausgereicht ist, und den genannten Abdeckschirm freiläßt (Figur 10).

6. Gerät nach einem der Ansprüche 1 bis 5, dadurch gekennzeichnet, daß das hintere Ende des Schiffskörpers durch einen "Schiffsspiegel" (4) und durch einen Portalrahmen (8, 9, 10) über diesem "Spiegel" gebildet ist, wo hingegen einerseits eine entferenbare Wand (11) vorzugsweise wenigstens teilweise durchsichtig (19) geeignet ist, oberhalb des "Spiegels" (4) innerhalb des Rahmens, der von dem Portalrahmen (8) gebildet ist, ausgerichtet zu werden, andererseits der entfernbare Vordersteven, wenn er den Navigationsstand (3) überdeckt, in Anschlag auf den Portalrahmen (8, 9, 10) ist.

7. Gerät nach Anspruch 6, dadurch gekennzeichnet, daß ein Kerbenkranz bzw. eine Nut (24) gegebenenfalls diskontinuierlich an den Seiten (9, 10) des Portalrahmens (8) angeordnet ist.

**Claims**

1. A craft comprising a hull (1) capable of floating on water, the aft part of said hull constituting the hollow space (3) of a navigation cabin, and a forward end part which constitutes a removable stem (2) separate from the hull (1), capable of being connected to and detached from the forward part of the hull and which, in the configuration in which it is detached from said forward part of the hull, is adapted to be positioned after turning over above the navigation cabin to constitute a volume, preferably a living room, characterized in that it is further provided with passages (12), which are provided in the lower part of the wall separating the volume (25) defined by the removable stem (2) and by the forward part (1) in the configuration (figure 5) in which the stem (2) is connected to the hull (1), from the outside of said hull, and which create a communication between said volume (25) and the outside of the stem (2).

2. Craft according to claim 1, characterized in that said passages are constituted by portions (12) of the lower front part of the hull (1), which, in the zone joining the stem with the hull, are offset with respect to the adjacent surface (13) of said hull.

3. Craft according to any one of claims 1 to 2, characterized in that the removable stem (2) is rendered fast with the front of the hull by connecting said fastening means comprising, in particular, a rebate ring (20; 24), possibly discontinuous, located in a plane containing a transverse horizontal axis (A; B) of the hull.

4. Craft according to any one of claims 1 to 3, characterized in that the configuration in which the removable stem covers the navigation cabin, this stem is fitted to the hull and completely separates the navigation cabin from the space outside the craft (Figures 2 and 4).

5. Craft according to any one of claims 1 to 3, characterized in that the forward upper edge of the navigation cabin is constituted by a transparent visor (7) whereas, in the configuration in which the removable stem covers the navigation cabin, this stem is fitted to the edge (29) of the visor and leaves said visor uncovered (Figure 10).

6. Craft according to any one of claims 1 to 5, characterized in that the aft end of the hull is constructed by a transom (4) and by a frame (8—9—10) surmounting said transom, whereas, on the one hand a removable wall (11), preferably at least partially transparent (10) is adapted to be fitted above the transom (4), within the framework constituted by the frame (8), and, on the other hand, the removable stem, when it covers the navigation cabin (3), is in abutment on said frame (8, 9, 10).

7. Craft according to claim 6, characterized in that an optionally discontinuous rebate ring (24), is located on the faces (9, 10) of the frame (8).

EP  0 222 626  B1

Fig. 1

Fig. 2

1

Fig.3

Fig.4

2

Fig. 5

Fig. 10

Fig.6

20

1

2

13

12

12

13

P

Fig.7

2

20

1

Fig.8

6

5

4

Fig.9

9

2

24